# EUROPEAN PATENT APPLICATION

(11) **EP 1 067 760 A2**
(43) Date of publication of application: **10.01.2001**
(21) Application number: 00113275.2
(22) Date of filing: 21.06.2000
(51) Int. Cl.: H04N 1/32

(54) **Image forming apparatus**

(30) Priority: 22.06.1999 JP 17543799
(71) Applicant: KONICA CORPORATION, Tokyo (JP)
(72) Inventor: Suzuki, Chikatsu, Hachioji-shi, Tokyo (JP); Kurihara, Susumu, Hachioji-shi, Tokyo (JP); Ushio, Masaru, Hachioji-shi, Tokyo (JP); Soma, Utami, Hachioji-shi, Tokyo (JP)
(74) Representative: Henkel, Feiler, Hänzel

(57) **Abstract**

An image forming apparatus provided with the first copier having a scanner which reads images of a document and the first image forming unit which forms an image on a recording material based on image data outputted from the scanner, the second copier having the second image forming unit which forms an image on a recording material based on image data outputted from the scanner, and a transmitter which conducts transmission of image data and control signals between the first and the second copiers, in which each of the first and the second copiers is provided with a interface for receiving a key counter which counts a number of image forming operations by respective one of the first and second copiers, and at least one of the interfaces is provided with a controller which gives operation-enable signals to the first and the second copiers when the key counter is attached to the interface.

## Description

### BACKGROUND OF THE INVENTION

The present invention relates to an image forming apparatus, and in particular, to an image forming apparatus performing the so-called tandem operations wherein plural image forming apparatus main bodies are connected, and an image can be formed on a recording material in each of the plural image forming apparatus main bodies from image data obtained through reading by one scanner.

A conventional image forming apparatus performing tandem operations (a tandem image forming apparatus) has been proposed by TOKUGANHEI No. 7-204493, for example, and in the case of a copying machine representing an example of an image forming apparatus, it has been put to practical use in the copying machine "Konica 7060" (trade name). These tandem image forming apparatuses are evaluated in terms of usefulness as a copying machine having high speed copying capacity, because copying is conducted simultaneously in each of plural copying machines (image forming apparatus main bodies), and the range of its use is estimated to be increased.

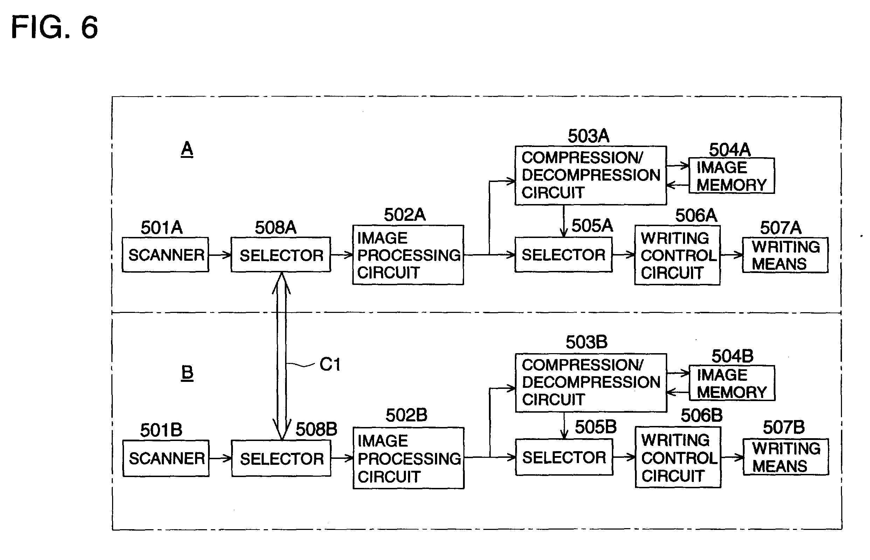

Fig. 6 is a block diagram of an image data processing system in a conventional tandem image forming apparatus. In the explanation below, a copying machine is used as an example of an image forming apparatus main body, and an example to conduct copying operations as an example of image forming will be explained. In this case, an example of simultaneous copying by first copying machine A and second copying machine B is shown, and Fig. 6 shows a block diagram in which reading processing up to writing processing for each copying machine among operations of both copying machine A and copying machine B are performed. Each of 501A and 501B is a scanner for outputting image signals obtained through reading, each of 502A and 502B is an image processing circuit for conducting image processing such as a change of magnification, and each of 503A and 503B is a compression/expansion circuit for image data.

Each of 505A and 505B is a selector to select whether to conduct direct writing of image data or to store in a memory momentarily, each of 506A and 506B is a writing control circuit to drive each of writing means 507A and 507B, and each of 507A and 507B is a writing means to write on a photoreceptor whose light-emitting element is a semi-conductor laser.

The symbol C1 is a cable which conducts transmission of image data between copying machine A and copying machine B, and selector 508A is one to select whether to input image data from scanner 501A in image processing circuit 502A or to input image data from scanner 501B in image processing circuit 502A. In the same way, selector 508B is one to select whether to input image data in image processing circuit 502B from scanner 501A Or to input image data in image processing circuit 502B from scanner 501B.

For example, when making copying machine A and copying machine B to perform tandem operations for copying of 100 sets from 10 sheets of documents, reading is set on copying machine A which reads 10 document sheets, then, a tandem mode (mode to execute tandem operations) is specified on an operation panel (not shown), and when a copy button is pressed after setting the number of copies of 100, image data for 10 document sheets read by scanner 501A are stored in both of image memories 504A and 504B in this case through selectors 508A and 508B. Then, for example, the number of sets of copies is automatically allocated to copying machine A and copying machine B so that each of them may make copies of 50 sets, thus, it is possible to copy at the speed which is twice the speed in the case of one copying machine.

On the other hand, some image forming apparatuses are provided with a key counter for the purpose of counting the number of sheets used in the case of a pay apparatus.

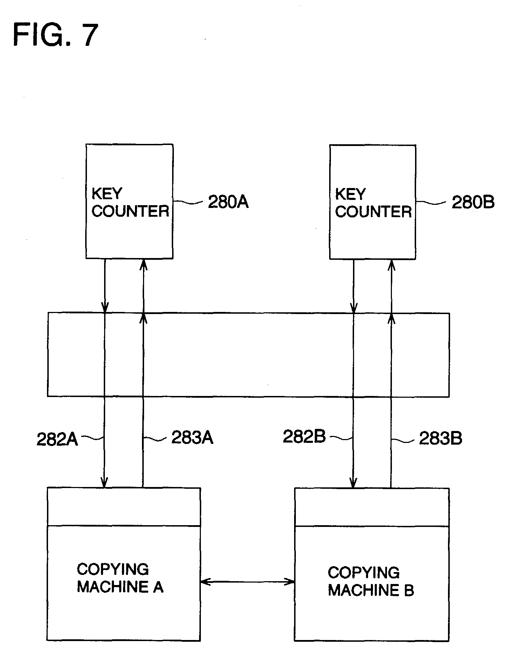

With regard to this key counter, when key counters 280A and 280B are set respectively on copying machine A and copying machine B by a user as shown in Fig. 7, signals to permit copying operations are given only to one copying machine on which the key counter is set, and the number of copied sheets is counted by key counter 280A for copying machine A, while, it is counted by key counter 280B for copying machine B, so that copying operations are allowed to be conducted only when a coin is deposited at the time of copy acceptance on a pay copying machine, for example; or only when a key counter gives copying-enable signals for the budget control of each organization.

First, when copying machine B only is used, key counter 280B of the copying machine B sends copying-enable signals 282B to the copying machine B, and a user conducts copying for documents. The key counter 280B counts the number of copies from copied sheets signal 283B which comes from print sheets counting section (not shown) of the copying machine B.

The foregoing is an example wherein one copying machine is used independently. However, when using a system wherein plural copying machines in quantity of two or more are connected in tandem, because of a large number of copies, a user sets key counters 280A and 280B respectively on copying machine A and copying machine B, for example, and image data obtained through reading by a scanner of each of copying machines A and B are subjected to copying on each of the copying machines A and B, which means that copying on a tandem mode can not be carried out. Further, the key counter 280A counts the number of copies made by the copying machine A, while, the key counter 280B counts the number of copies made by the copying machine B.

However, in the conventional example mentioned above, when trying to set a key counter on a tandem mode copying machine having therein plural copying machines connected electrically which is capable of making a large number of copies, only one copying machine on which the key counter is set is given a copying-enable signal, and the key counter counts the number of copies for the only one copying machine. Therefore, it is necessary to set a key counter on each copying machine, and in the case of two copying machines A and B, two key counters are needed, and counting of the number of copies is conducted separately. Thus, for the counting of actual number of copies, a user itself is required to total the counted values equivalent to two copying machines when the number of copying machines is two, and equivalent to plural copying machines when the number of copying machines is plural. When setting a key counter on each copying machine connected on a tandem mode, the key counter does not function as a tandem mode as stated above, causing the a totaling operation to be complicated and time-consuming, which has been a problem.

### SUMMARY OF THE INVENTION

The object of the invention is to provide an image forming apparatus wherein a key counter is set on copying machines connected on a tandem mode basis, and one key counter, provided on at least one of a plural copying machines, can permit all of the plural copying machines to do copying operations even when copies are outputted from plural copying machines, so that one key counter can count the total copied sheets of the copying machines used, and management of copied sheets by plural copying machines is made possible by simple operations in the same way as in copying on a single copying machine, even when plural copying machines are connected (tandem connection) in a way to make operations possible in a tandem mode wherein plural copying machines are used.

To attain the object stated above, the invention is represented by an image forming apparatus provided therein with a first image forming apparatus main body having a first image reading means which reads images of a document and a first image forming means which forms an image on a recording material based on image data outputted from the first image reading means, a second image forming apparatus main body which forms an image on a recording material based on image data outputted from the first image reading means, and a transmission means which conducts transmission of image data and control signals between the first image forming apparatus main body and the second image forming apparatus main body, in which each of the first image forming apparatus main body and the second image forming apparatus main body is provided with a receiving means capable of receiving a key counter which counts a number of image forming operations by respective image forming apparatus main body, and at least one of the receiving means is provided with a controller which gives operation-enable signals to the first image forming apparatus main body and the second image forming apparatus main body when the key counter is received.

In this image forming apparatus, one key counter can enable plural image forming apparatus main bodies to do operations for forming images, when images read by one image forming apparatus main body are outputted as copies from plural image forming apparatus main bodies.

In the invention, it is characterized that the key counter mentioned above counts the total number of image forming operations by the first image forming apparatus main body and the second image forming apparatus main body when the key counter is received by one of the receiving means.

In this image forming apparatus, a single key counter set on one image forming apparatus main body can enable plural image forming apparatus main bodies to do operations for image forming and the key counter can count the total number of copied sheets made by plural image forming apparatus main bodies.

The invention is represented by an image forming apparatus provided therein with a first image forming apparatus main body having a first image reading means which reads images of a document and a first image forming means which forms an image on a recording material based on image data outputted from the first image reading means, a second image forming apparatus main body which forms an image on a recording material based on the image data outputted from the first image reading means, and a transmission means which conducts transmission of image data and control signals between the first image forming apparatus main body and the second image forming apparatus main body, in which each of the first image forming apparatus main body and the second image forming apparatus main body is provided with a receiving means capable of receiving a key counter which counts at least a number of image forming operations conducted by each image forming apparatus main body, and the key counter received on either one of the receiving means is able to count the total number of image forming operations conducted by the first image forming apparatus main body and the second image forming apparatus main body.

In the image forming apparatus stated above, the total number of copies made by plural image forming apparatus main bodies in the image forming apparatus main body on which the key counter is set can be counted by the key counter.

In the invention, each of the first image forming apparatus main body and the second image forming apparatus main body is provided with a setting input means, and a controller for making an input of the setting input means, provided on at least one of the image forming apparatus main bodies on which the key counter is received, to be effective.

In the image forming apparatus stated above, the setting input means of the image forming apparatus main body on which the key counter is received is effective, and operations of a user can be completed at a single location.

In the invention, when the key counter is received by each of the receiving means of the first image forming apparatus main body and the receiving means of the second image forming apparatus main body, it is characterized that the total number of image forming operations by the first image forming apparatus main body and the second image forming apparatus main body is counted by selected one of the key counters.

In the image forming apparatus stated above, when a key counter is received on each of the plural image forming apparatus main bodies connected in tandem so that plural counters are received on the entire image forming apparatus, it is possible to designate optional one key counter to count the total number of copies made by plural image forming apparatus main bodies, and thereby to make it unnecessary for other key counters to count.

In the invention, it is characterized that each of the first image forming apparatus main body and the second image forming apparatus main body is provided with a setting input means, and the controller mentioned above controls the key counter, received on the image forming apparatus main body on which input operations have been conducted, to count the total number of copies made by plural image forming apparatus main bodies.

In the image forming apparatus stated above, it is possible to designate the key counter on the image forming apparatus main body on which the reading of document, setting of copy conditions and operations of a copy button have been conducted as a key counter to count the total number, among plural key counters set on the plural image forming apparatuses connected in tandem.

In the invention, it is characterized that when the counter is received by the receiving means on each of the first image forming apparatus main body and the second image forming apparatus main body and a mode wherein the key counter gives operation-enable signals only to each image forming apparatus main body is selected, each key counter counts the number of the image forming operations of the image forming apparatus main body on which the key counter is received, and when the counter is received by the receiving means on each of the first image forming apparatus main body and the second image forming apparatus main body, and a mode wherein one of the key counters gives operation-enable signals to plural image forming apparatus main bodies is selected, the key counter which gives operation-enable signals counts the total number of image forming operations conducted by each image forming apparatus main body.

In the image forming apparatus stated above, it is possible to conduct two image forming operations including an operation to count collectively with a single key counter for plural image forming apparatus main bodies connected in tandem and an operation in an ordinary mode wherein each image forming apparatus main body counts individually with its own key counter, and both operations can be used selectively.

In the invention, it is characterized that plural jobs, each conducting a series of image forming operations, can be established in the image forming apparatus stated above, and a key counter, which gives operation-enable signals and conducts the number of image forming operations, can be selected corresponding to the established job.

In the image forming apparatus stated above, a key counter can distribute the counted total number of sheets accurately for each job, even when the jobs are reserved by separate persons, independently of a tandem mode and an ordinary mode.

### BRIEF DESCRIPTION OF THE DRAWINGS

Fig. 1 is an illustration of an image forming apparatus related to an embodiment of the invention.
Fig. 2 is a block diagram of a read image data processing system of an image forming apparatus.
Fig. 3 is a sectional view of an image forming apparatus.
Fig. 4 is a diagram showing a display panel of an image forming apparatus.
Fig. 5 is a flow chart of operations of an image forming apparatus.
Fig. 6 is a block diagram of an image data processing system of a conventional image forming apparatus.
Fig. 7 is an illustration of a conventional key counter.

### DETAILED DESCRIPTION OF THE INVENTION

An embodiment of the invention will be explained as follows, referring to the drawings. In the following explanation, there will be explained an example of an image forming apparatus wherein a copying machine is used as an example of an image forming apparatus main body.

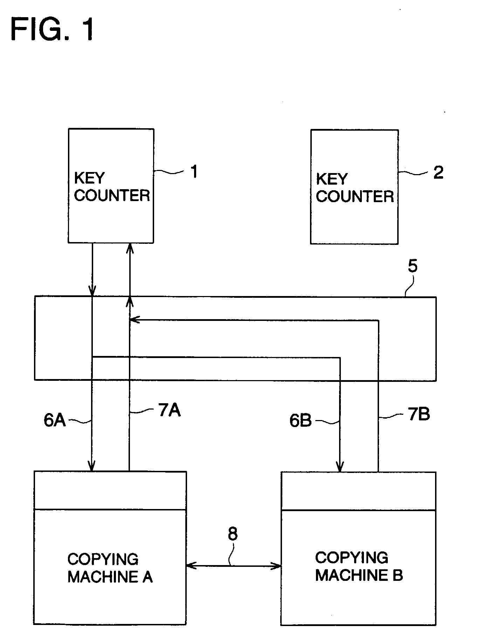

Fig. 1 is an illustration of an image forming apparatus related to an embodiment of the invention.

In Fig. 1, each of the numerals 1 and 2 is a key counter composed of four terminals (not shown) including a power supply terminal for power and grounding, an enable signal (copy-enable signal) terminal and a signal (pulse signal for counting the number of sheets inputted in the key counter from a copying machine for each copy) terminal.

Copying machine A and copying machine B are connected in tandem for two copying machines (plural copying machines are also acceptable, without being limited to two copying machines) to constitute an image forming apparatus of the invention. The numeral 5 represents a counter interface, and it is composed of a selector circuit which switches signals between the key counters 1 and 2 and copying machines A and B. The symbols of 6A and 6B are copy-enable signals (an example of operation-enable signals) sent from the counter interface 5 to the copying machines in correspondence with the attachment of the key counter 1 to the interface, 7A and 7B are copy quantity signals returned from the copying machine to the key counter 1 through the counter interface 5, and the numeral 8 shows a connection cable located between copying machine A and copying machine B, through which the control signals and image signals are transmitted.

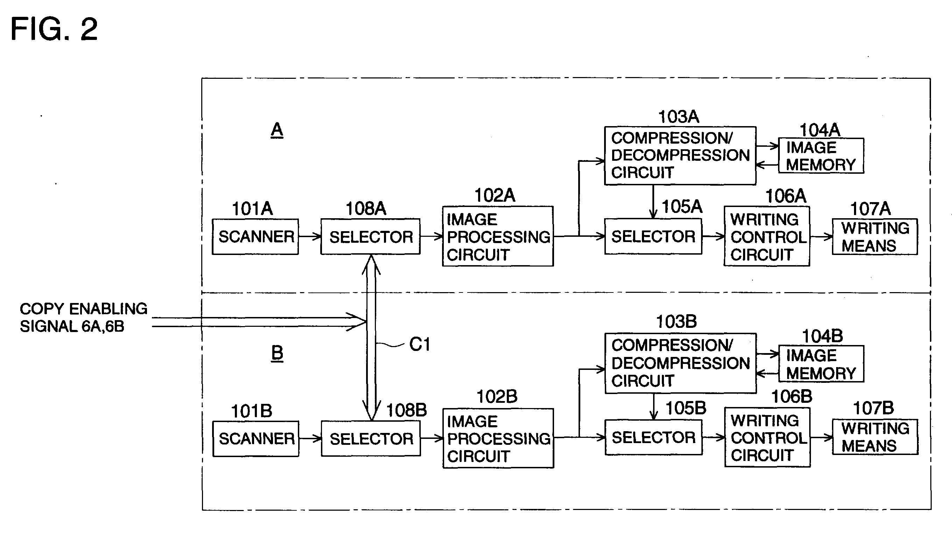

Fig. 2 is a block diagram of an image data processing system of an image forming apparatus shown in Fig. 1.

Fig. 2 is of the same structure as in a block diagram of a read image data processing system of an image forming apparatus shown in Fig. 6, and a point where copy-enable signals 6 coming from counter interface 5 are connected to cable C1 is different. Other points are the same as those in Fig. 6, and overlapped explanation will be omitted accordingly.

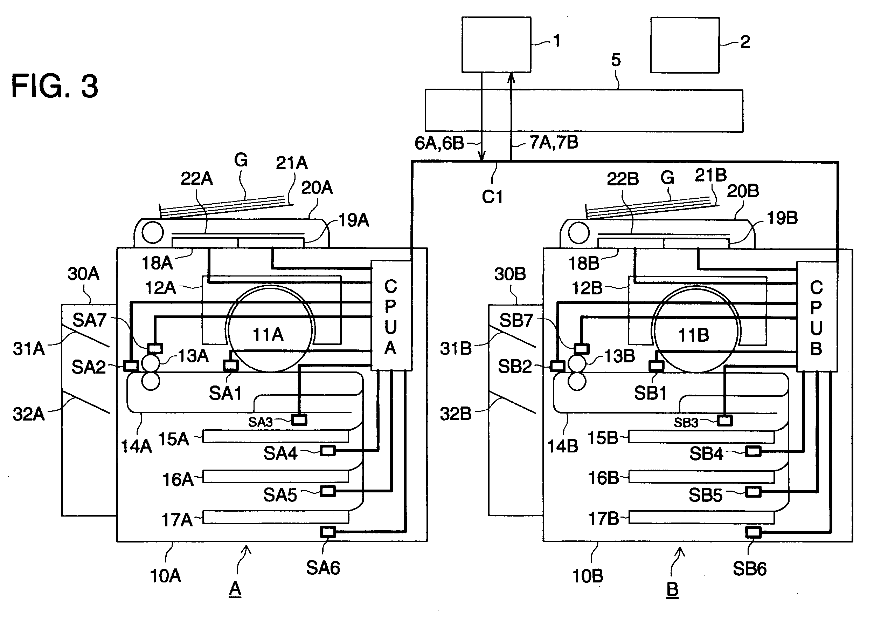

Fig. 3 is a sectional view of the image forming apparatus shown in Fig. 1.

Fig. 3 is a sectional view of copying machine A and copying machine B both capable of operating in a tandem mode, copying machine A has therein image forming section (image forming means) 10A, image reading section (image reading means) 20A and recording material holding section 30A, while, copying machine B has therein image forming section 10B, image reading section 20B and recording material holding section 30B.

In image forming sections 10A and 10B, each of 11A and 11B is an electrophotographic photoreceptor (hereinafter referred to as a photoreceptor) which is surrounded by an image forming section shown respectively by 12A and 12B. Each of image forming sections 12A and 12B forms a toner image on the circumferential surface on each of photoreceptors 11A and 11B by performing charging, exposure processing and development processing. Each of image forming sections 12A and 12B has a cleaning unit which removes toner remaining on each of photoreceptors 11A and 11B after transferring. Each of 13A and 13B is a fixing unit which fixes a toner image on a recording material. Each of copying machines A and B has each of sheet-feed sections 15A - 17A and 15B - 17B where recording sheets in various sizes are loaded. Each of copying machines A and B further has each of two-sided image forming sheet-feed sections 14A and 14B which reverses the recording sheet having on its obverse side the formed image and supplies it again to the image forming section.

A recording sheet supplied from either one of sheet-feed sections 15A - 17A passes through fixing unit 13A to be fixed after a toner image has been transferred onto the recording sheet from photoreceptor 11A, and then, is ejected to the recording material holding section 30A. In the same way, a recording material supplied from either one of sheet-feed sections 15B - 17B is subjected to fixing processing after a toner image has been transferred onto the recording material, and then, is ejected to holding section 30B.

Each of image reading sections 20A and 20B is an image scanner having therein each of document-placing stands 21A and 21B where there is placed document G from which an image is read, and each of ejected sheet holding sections 22A and 22B on which a document from which an image has been read is placed.

Each of holding sections 30A and 30B has therein each of trays 31A and 31B on which recording sheets are stacked without being stapled and each of trays 32A and 32B on which stapled recording materials are stacked.

Each of SA1 and SB1 is a recording sheet detection sensor arrange at the position where a recording material is separated from each of photoreceptors 11A and 11B, and it outputs a jam signal when a recording sheet is jammed at this separation position. Each of SA2 and SB2 is a sensor that detects a jam of a recording sheet in each of fixing units 13A and 13B.

Each of SA4 - SA6 and SB4 - SB6 is a sensor to detect existence of a recording material in each of sheet-feed sections 15A - 17A and 15B - 17B. Each of SA3 and SB3 is a sensor to detect a jam of a recording sheet in each of two-sided image forming sheet-feed sections 14A and 14B.

Each of SA7 and SB7 is a sensor to detect fixing temperature at each of fixing units 13A and 13B.

Outputs from various sensors SA1 - SA7 in the copying machine A explained above are inputted in CPUA, while, outputs from various sensors SB1 - SB7 in the copying machine B explained above are inputted in CPUB.

In addition to outputs of various sensors stated above, signals from operation panels 18A and 18B are inputted in the control sections CPUA and CPUB, and the CPUA and CPUB control respectively a display section of display panel 19A and contents to be displayed on display panel 19B. Further, the CPUA and CPUB are connected by cable C1 through which control signals are transmitted, and the cable C1 is connected with counter interface 5 so that the CPUA and CPUB are connected with key counters 1 and 2 through the counter interface 5 and cable C1.

Copying in a tandem mode wherein a key counter of the invention, is set will be explained in detail as follows.

In an image forming apparatus composed of copying machine A and copying machine B which are connected in tandem, image forming on a tandem mode basis explained below is conducted, in addition to an individual mode wherein an image is formed independently in each image forming section based on image data obtained through reading by an image reading section in each copying machine.

In an example to obtain 100 sets of copies from 10 document sheets in a tandem mode, a user sets 10 sheets of documents on document-placing stand 21A of copying machine A, then, designates a tandem mode on operation panel 18A, and sets a copy quantity of 100 sets and presses a copy button. Then, image data for 10 sheets of documents obtained by image reading section 20A are stored in both of image memory 104A and 104B. Then, 50 sets out of the copy quantity are allocated to copying machine A and another 50 sets are allocated to copying machine B automatically, so that each copying machine make copies.

A copy quantity, a size of a recording sheet used, copy magnification and selection of a single-sided copy for copying on a single side of a recording material or a two-sided copy for copying on both sides are set through operations on operation panel 18A, and control signals by these operations are not only used for control by CPUA in copying machine A but also used for control of copying machine B by CPUB after being transmitted to CPUB from cable C1.

While copying machine A and copying machine B are in process of copying, when recording sheets in designated size are used up from sheet-feed sections 15B - 17B in copying machine B, either one of sensors SA4 - SA6 detects absence of the recording sheet, and this information is transmitted to CPUA through CPUB and cable C1 so that abnormality is displayed on display section 19A.

In addition to existence of a recording sheet, a jam of a recording sheet detected by each of sensors SB1 and SB2 in copying machine B is also displayed on display panel 19A of copying machine A.

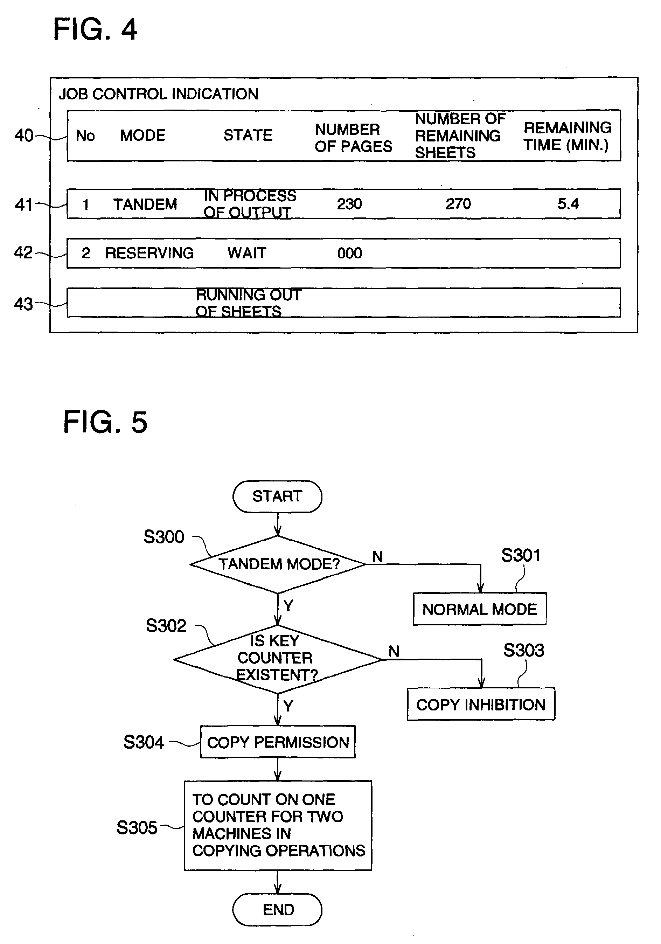

Fig. 4 is a diagram showing a display panel of the image forming apparatus shown in Fig. 3.

Fig. 4 shows a job control display section on each of display panels 19A and 19B. This display panel has thereon introduction section 40 for items to be displayed, display section 41 displaying top priority job, display section 42 displaying second priority job and display section 43 showing the state (namely, the state of copying machine B for copying machine A, and the state of copying machine A for copying machine B) of the target apparatus connected with cable C1.

For example, Fig. 4 indicates the following state.

Copying machine A is set to be in a tandem mode, and it is in process of copying, where copying for 230 copies out of 500 copies has been finished, and 270 sheets are remaining unfinished. The time required for copying of the remaining sheets is 5.4 minutes. There is reserved succeeding copying, and it is displayed as the second priority job on display section 42.

In copying machine B, there is no sheet in a sheet-feed section.

In copying machine B, when a recording sheet is jammed, "JAM" is displayed on display section 43. Further, "WAIT" is displayed because the reserved succeeding job is on standby.

Next, copy operations in the case of setting a key counter in a tandem mode explained above will be explained, referring to a flow chart in Fig. 5. Fig. 5 is a flow chart of operations of an image forming apparatus in Fig. 1.

In this case again, a tandem mode will be explained by using an example of copying by allocating copies of 100 sets to copying machine A and copying machine B from 10 sheets of documents.

First, when key counter 1 or 2 is set, judgment is made to find whether or not a tandem mode is designated on panel 18A or 18B (S300). If it is not designated, the mode is an ordinary mode wherein copying machine A and copying machine B are not connected, and thereby, operations are individual operations, and copy quantity in copying machine A only is counted in an example of key counter 1 (S301).

When a tandem mode is designated on operation panel 18A or 18B in judgment at S300, copying machine A and copying machine B are connected in tandem, and selectors 108A and 108B are connected by cable C1 and CPUA and CPUB are connected by cable C1, and further, cable circuits C1 and C1 are connected to key counter 1 through counter interface 5.

Now, it is further judged whether key counter 1 or 2 is set or not (S302). When the key counter is not set, copying is prohibited (S303). The reason for the foregoing is a precondition representing the state that is controlled to allow only a user who has set the key counter to copy and to prohibit copying conducted by other persons.

When the key counter 1 or 2 is judged to be set in judgment in S302, copying is permitted (S304).

Since the key counter 1 is set in this case, the number of sets of copies, a size of a recording sheet used, copy magnification, and an operation to select whether single-sided copying or two-sided copying are set on operation panel 18A, and control signals caused by the setting are not only used for control by CPUA in copying machine A but also transmitted from cable C1 to CPUB to be used for control of copying machine B by CPUB.

When a copy button on operation panel 18A is pressed in this case, copy-enable signals 6 are sent out from key counter 1, and thereby, selector 108A makes image memory 104A to store image data from scanner 101A of copying machine A which is in process of reading, and selector 108B makes image memory 104B to store image signals from scanner 101A. CPUA and CPUB communicate through cable C1, and when they receive copy-enable signals 6, they confirm the number of copy sets established to be 100 and they conduct operation to allocate 50 sets to each of copying machine A and copying machine B. Thus, image data are read out of the image memories in both copying machines for copying, and CPUA and CPUB send each copy quantity to key counter 1 by means respectively of copy quantity signals 7A and 7B.

Owing to the tandem mode, key counter 1 counts each copy quantity of 50 sheets for each of copying machine A and copying machine B, and it is possible for one key counter to count the total copy quantity of 100 sheets for two copying machines (S305).

Though key counter 1 is set on copying machine A, and tandem copying is conducted by copying machine A and copying machine B by means of image data read by scanner 101A of copying machine A in the example described above, even when key counter 2 is set on copying machine B, one key counter 2 set on an image forming apparatus wherein copying machines A and B are connected gives copy-enable signals to each of copying machines A and B, and counts the total value of copy quantity, in the same way as in the foregoing.

Further, when key counter 1 is set on copying machine A and key counter 2 is set on copying machine B for conducting copying under a tandem mode, it is possible to arrange so that a key counter interface, to which an arbitrary one key counter is attached, gives copy-enable signals to each copying machine in correspondence with the attachment of the key counter, and the total number of copy quantity for both copying machines is counted. With regard to selection of the arbitrary one key counter, it is preferable to select from key counters which are respectively set on a copying machine on which a document has been read, a copying machine on which the copy conditions have been set, and a copy machine on which a copy button has been operated, for example, and other conditions and any establishment of conditions are further acceptable.

It is preferable to count the total number with an arbitrary one key counter when conducting copying under a tandem mode, and to count with each key counter when conducting copying under an ordinary mode wherein copy-enable signals are given to each copying machine on which each key counter is set.

Next, with regard to a copying machine having a tandem connection capable of doing a multi-job for setting and reserving copy operations under copy conditions desired by plural users, even when a reserved job in stand-by following the current outputting is reserved by another person and by another copying machine, it is preferable to arrange so that totaling count of copies in the current outputting, totaling count of copies for the succeeding reserved job and totaling count for the reserved job after the succeeding reserved job are separately conducted, and totaling count of copies executed in the job is conducted by the key counter set on the copying machine which has reserved a job.

As explained above, in the invention, when copies are outputted by plural copying machines from images read by a single image forming apparatus, it is possible that operation-enable signals are given to plural image forming apparatus main bodies in correspondence with the attachment of one key counter to one of the plural copying machines so that image forming may be conducted.

Further, in the invention, it is possible that operation-enable signals are given to plural image forming apparatus main bodies for image forming operations in correspondence with the attachment of a key counter to one image forming apparatus main body, and the key counter mentioned above conducts totaling count for the total copy quantity outputted from plural image forming apparatus main bodies.

Further, in the invention, it is possible for the key counter set on an image forming apparatus main body to conduct totaling count for the total of copy quantity outputted from plural image forming apparatus main bodies.

Further, in the invention, a setting input means of an image forming apparatus main body on which a key counter is received is valid, and thereby, operations of a user can be completed at one location.

Further, in the invention, when a key counter is received on each of plural image forming apparatus main bodies connected in tandem, and thereby, when plural key counters are received on the entire image forming apparatus, it is possible to arrange so that an arbitrary one key counter among plural key counters is designated to conduct totaling count of copy quantity outputted from plural image forming apparatus main bodies, and other key counters are not required to count.

In the invention, among plural key counters set on plural image forming apparatuses connected in tandem, it is possible to designate, as a totaling key counter, a key counter on the image forming apparatus main body in which a document is read, copy conditions are set, and a copy button is operated.

In the invention, an operation to conduct totaling count for plural image forming apparatus main bodies connected in tandem mode, an operation of an ordinary mode wherein each image forming apparatus main body counts individually with each key counter, and both image forming operations are made to be possible, and they can be used selectively.

Further, in the invention, a key counter can allocate the number of sheets for totaling count accurately for each job, even when jobs are reserved by separate persons, or even in the case of a tandem mode or of an ordinary mode.

## Claims

1. An image forming apparatus, comprising:
a first image forming apparatus main body having:
(a) a first image reading device for reading an image of a document and outputting image data;
(b) a first image forming device for forming an image on a recording material according to said image data outputted from said first image reading device; and
(c) a first receiving device for receiving a key counter;
a second image forming apparatus main body having:
(a) a second image forming apparatus for forming an image on a recording material according to said image data outputted from said first image reading device; and
(b) a second receiving device for receiving the key counter;
a transmission means for conducting transmission of image data and control signals between said first image forming apparatus main body and said second image forming apparatus main body; and
the key counter for counting a number of image forming operation with said first image forming apparatus main body and/or said second image forming apparatus main body;
wherein at least one of said first receiving device and said second receiving device is provided with a controller which gives operation-enable signals to said first image forming apparatus main body and said second image forming apparatus main body when said key counter is received.

2. The image forming apparatus of claim 1, wherein said key counter counts the total number of image forming operations by said first image forming apparatus main body and said second image forming apparatus main body when said controller gives operation-enable signals to said first image forming apparatus main body and said second image forming apparatus main body.

3. An image forming apparatus, comprising:
a first image forming apparatus main body having:
(a) a first image reading device for reading an image of a document and outputting image data;
(b) a first image forming device for forming an image on a recording material according to said image data outputted from said first image reading device; and
(C) a first receiving device for receiving a key counter so as to count at least a number of image forming operation with said first image forming apparatus;
a second image forming apparatus main body having:
(a) a second image forming device for forming an image on a recording material according to said image data outputted from said first image reading device; and
(b) a second receiving device for receiving said key counter so as to count at least a number of image forming operation with said second image forming apparatus main body; and
a transmission means for conducting transmission of image data and control signals between said first image forming apparatus main body and said second image forming apparatus main body;
wherein said key counter is capable of counting the total number of image forming operations by said first image forming apparatus main body and said second image forming apparatus main body when said key counter is received by one of said first receiving device and said second receiving device.

4. The image forming apparatus of claims 1 and 2, wherein each of said first image forming apparatus main body and said second image forming apparatus main body is provided with a setting input device for inputting settings and said controller for enabling an input operation of said setting input device, provided on at least one of said first image forming apparatus main body and said second image forming apparatus main body on which said key counter is received.

5. The image forming apparatus of claim 3, wherein each of said first image forming apparatus main body and said second image forming apparatus main body is provided with a setting input device for inputting settings and a controller for enabling an input operation of said setting input device, provided on at least one of said first image forming apparatus main body and said second image forming apparatus main body on which said key counter is received.

6. The image forming apparatus of claim 1, when said key counter is received by each of said first receiving device and said second receiving device, the total number of images forming operations by said first image forming apparatus main body and said second image forming apparatus main body is counted by selected one of said key counter received by said first receiving device and said key counter received by said second receiving device.

7. The image forming apparatus of claims 1 and 2, wherein each of said first image forming apparatus main body and said second image forming apparatus main body is provided with a setting input device for inputting settings and said controller for controlling said key counter, received by at least one of said first image forming apparatus main body and the second image forming apparatus main body on which inputting operation is conducted with said setting input device, so as to count a total number of image forming operations by said first image forming apparatus main body and said second image forming apparatus main body.

8. The image forming apparatus of claims 3 and 6, wherein each of said first image forming apparatus main body and said second image forming apparatus main body is provided with a setting input device for inputting settings and a controller for controlling said key counter, received by at least one of said first image forming apparatus main body and the second image forming apparatus main body on which inputting operation is conducted with said setting input device, so as to count a total number of image forming operations by said first image forming apparatus main body and said second image forming apparatus main body.

9. The image forming apparatus of claim 1, further comprising:
a mode selector for selecting one of a first mode, wherein said key counter gives operation-enable signals only to respective one of said first image forming apparatus main body and said second image forming apparatus main body by which said key counter is received, and a second mode, wherein said key counter gives operation-enable signals to both of said first image forming apparatus main body and said second image forming apparatus main body;
wherein when said key counter is received by each of said first receiving device and said second receiving device and said first mode is selected, said key counter counts a number of image forming operations of respective one of said first image forming apparatus main body and said second image forming apparatus main body; and when said key counter is received by each of said first receiving device and said second receiving device and said second mode is selected, said controller gives operation-enable signals to said first image forming apparatus main body and said second image forming apparatus main body, said key counter, received by one of said first image forming apparatus main body and said second image forming apparatus main body and by which said operation-enable signals are given, counts the total number of image forming operations by said first image forming apparatus main body and said second image forming apparatus main body.

10. The image forming apparatus of claim 9, further comprising:
a setting device for setting a plurality of series of image forming operations;
wherein said key counter, received by one of said first image forming apparatus main body and said second image forming apparatus main body with which each of said plurality of series of image forming operations is conducted, counts a total number of said each of said plurality of series of image forming operations.
